# EUROPÄISCHE PATENTSCHRIFT

(11) **EP 2 010 729 B1**
(45) Veröffentlichungstag und Bekanntmachung des Hinweises auf die Patenterteilung: **12.08.2009**
(21) Anmeldenummer: 07726568.4
(22) Anmeldetag: 01.03.2007
(51) Int. Cl.: E04B 1/86

(54) **MEHRSCHICHTIGES SCHAUMSTOFF-VERBUNDELEMENT MIT AUSSPARUNGEN**
MULTI-LAYERED FOAMED COMPOSITE ELEMENT COMPRISING RECESSES
ÉLÉMENT COMPOSITE EN MOUSSE MULTICOUCHE COMPORTANT DES ÉVIDEMENTS

(30) Priorität: 10.03.2006 EP 06110922
(43) Veröffentlichungstag der Anmeldung: 07.01.2009
(73) Patentinhaber: BASF SE, 67056 Ludwigshafen (DE)
(72) Erfinder: MÖCK, Christof, 68259 Mannheim (DE); VATH, Bernhard, 68259 Mannheim (DE)
(86) Internationale Anmeldenummer: PCT/EP2007/051932
(87) Internationale Veröffentlichungsnummer: WO 2007/104651

(56) Entgegenhaltungen:
- WO-A-20/05095206
- US-B1- 6 789 645

## Beschreibung

Die Erfindung betrifft ein mehrschichtiges Schaumstoff-Verbundelement mit einer Gesamtdicke d, das mindestens drei Schichten aus einem offenzelligen Schaumstoff aufweist, wobei mindestens eine der inneren Schichten Aussparungen aufweist und die beiden äußersten Schichten keine Aussparungen aufweisen, dadurch gekennzeichnet, dass
i) in der Aussparungen aufweisenden inneren Schicht das Volumen der Aussparungen 20 bis 70 Vol.-% beträgt, und
ii) die Dicke der Aussparungen aufweisenden Schicht 20 bis 80 % der Gesamtdicke d beträgt.

Außerdem betrifft die Erfindung die Verwendung der Verbundelemente gemäß den Ansprüchen 1 bis 9 als schallabsorbierende Elemente.

Offenzellige Schaumstoffe, beispielsweise solche auf Basis von Melaminharzen oder Polyurethanen, werden in Form von Dämmelementen (z.B. Dämmschichten, -platten oder -bahnen) zur Wärmedämmung und insbesondere auch zur Schalldämmung eingesetzt, da ihre offenzellige Struktur den Schall wirksam absorbiert.

Es ist bekannt, die Dämmelemente zur Gewichtsverminderung - wichtig beispielsweise zur Minimierung des Treibstoffverbrauchs von Fahrzeugen und Flugzeugen - oder zur Optimierung der Schallabsorption mit Aussparungen (Hohlräumen) zu versehen. Die Begriffe Aussparung und Hohlraum werden in der vorliegenden Anmeldung synonym verwendet.

So beschreibt die EP 1 336 695 A1 ein plattenartiges Schallschutzbauelement, dessen der Gebäuderauminnenseite zugewandte Fläche gewellt und mit Nuten versehen ist.

Die DE 35 13 662 A1 offenbart eine Schalldämpfeinrichtung aus einer mit einem Noppenprofil versehenen Schaumstoffbahn, wobei die Noppenseite der Bahn vom Schalleinfall abgewandt angeordnet ist. Die Noppenseite der Bahn kann mit einer Folie bedeckt sein. Es werden auch Schalldämpfeinrichtungen aus mindestens zwei aneinanderliegenden, jeweils mit Noppenprofil versehenen Schaumstoffbahnen beschrieben.

Die WO 2005/095206 A1 beschreibt Isoliersysteme zur Temperatur- und Schallisolierung von Fugzeugrümpfen, die auf der Rumpfinnenseite zwischen den Längs- und Querspanten (frames, stringers) angebracht sind. Sie weisen mindestens eine Schicht aus einem offenzelligen, wasserabweisenden Schaum, beispielsweise auf Melaminbasis, und eine Dekordeckschicht (trim) auf. Fig. 5 und die Absätze [0037] bis [0041] der Beschreibung offenbaren ein mehrschichtiges System aus einer ersten Schaumschicht und einer zweiten, mit einer Faserschicht versehenen Schaumschicht. Beide Schichten sind über Distanzstücke (spacer), die ebenfalls aus dem Schaum bestehen, miteinander verbunden, sodass sich zwischen den Distanzstücken luftgefüllte Aussparungen (gaps) ergeben. Fig. 8 und 9 bzw. die Absätze [0046] bis [0053] beschreiben weitere Ausführungsformen mit mehreren Schichten, wobei wiederum jeweils eine Schicht mit Distanzstücken und dazwischenliegenden Aussparungen vorgesehen ist.

Die genannten Schalldämmelemente des Standes der Technik sind für anspruchsvolle Anwendungen hinsichtlich der Schallabsorption oder der Gewichtsreduktion nicht in allen Fällen zufriedenstellend.

Es bestand die Aufgabe, den geschilderten Nachteilen abzuhelfen. Weiterhin bestand die Aufgabe, verbesserte Verbundelemente aus offenzelligem Schaumstoff bereit zu stellen.

Die Verbundelemente sollten sich durch ein geringes Gewicht und zugleich eine gute Schallabsorption auszeichnen. Insbesondere sollten Verbundelemente gefunden werden, bei denen die Gewichtsreduktion durch das Einbringen von Aussparungen nur eine unterproportionale Verminderung der Schallabsorption bewirkt, verglichen mit einem "massiven" Element ohne Aussparungen.

Demgemäß wurden die eingangs definierten Verbundelemente und ihre Verwendung als schallabsorbierende Elemente gefunden. Bevorzugte Ausführungsformen der Erfindung sind den Unteransprüchen zu entnehmen.

Der Schaumstoff des Verbundelements ist offenzellig. Üblicherweise beträgt der Anteil der geschlossenen Zellen maximal 10, bevorzugt maximal 5 %. Bevorzugt ist der offenzellige Schaumstoff ausgewählt aus einem Melaminharz-Schaumstoff, einem Polyurethan-Schaumstoff und einem Polyimid-Schaumstoff.

Als Melaminharz-Schaumstoff sind bevorzugt solche aus einem Kondensationsprodukt aus Melamin und Formaldehyd geeignet, die auch als Melamin/Formaldehyd-Harze, MF-Harze oder Melaminharze bezeichnet werden. Solche elastischen, offenzelligen Melaminharzschaumstoffe sind bekannt und z.B. in den Schriften EP-A 17 671, 17 672, 37 470 und WO 01/94436 beschrieben.

Zur Herstellung des Melaminharzschaumes geht man aus von einem Melamin/Formaldehyd-Vorkondensat. Melamin/Formaldehyd-Kondensationsprodukte können neben Melamin bis zu 50, vorzugsweise bis 20, Gew.-% anderer Duroplastbildner, und neben Formaldehyd bis zu 50, vorzugsweise bis zu 20, Gew.-% anderer Aldehyde, einkondensiert enthalten. Besonders bevorzugt ist ein unmodifiziertes Melamin/Formaldehyd-Kondensationsprodukt. Als Duroplastbildner kommen beispielsweise in Frage: alkyl-und aryl-substituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate. Als Aldehyde können z.B. Acetaldehyd, Trimethylotacetaldehyd, Acrolein, Benzaldehyd, Furfurol, Glyoxal, Glutaraldehyd, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402.

Das Molverhältnis Melamin zu Formaldehyd liegt in der Regel bei 1 : 1,3 bis 1 : 3,5, insbesondere 1 : 1,6 bis 1 : 3,1. Die Melaminharze können außerdem Sulfitgruppen einkondensiert enthalten, was beispielsweise durch Zusatz von 1 bis 20 Gew.-% Natriumhydrogensulfit bei der Kondensation des Harzes geschehen kann (siehe EP-A 37470).

Das Melamin-Formaldehyd-Vorkondensat liegt üblicherweise als Lösung oder Dispersion vor, und wird mit den üblichen, zur Herstellung eines Schaums erforderlichen Zusatzstoffen vermischt. Solche Zusatzstoffe sind insbesondere Emulgatoren (anionische, kationische oder nichtionische Tenside, z.B. Alkylsulfate) zur Emulgierung des Treibmittels und zur Stabilisierung des Schaumes, und Treibmittel (chemische oder physikalische, z.B. Pentan), um aus der Melaminharz-Lösung einen Schaum zu erzeugen, sowie Härter (meist Säuren, z.B. Ameisensäure), die eine Weiterkondensation des Melaminharzes katalysieren.

Die Zusatzstoffe werden beispielsweise in einem Extruder, mit der wässrigen Lösung oder Dispersion des Melaminharzes homogen vermischt, wobei das Treibmittel ggf. auch unter Druck eingepreßt werden kann. Man kann jedoch auch von einem festen, z.B. sprühgetrockneten Melaminharz ausgehen und dieses dann mit einer wässrigen Lösung des Emulgators, dem Härter sowie dem Treibmittel vermischen. Nach dem Vermischen wird die Lösung oder Dispersion durch eine Düse ausgetragen und unmittelbar anschließend erhitzt, z.B. durch Hochfrequenzbestrahlung bei 2,45 GHz oder durch Mikrowellenbestrahlung, und dabei verschäumt. Die infolge Temperaturerhöhung und Verdampfen des Treibmittels aufschäumende Mischung wird beispielsweise zu einem Schaumstoffstrang geformt, der zu Blöcken zerschnitten wird.

Weitere Angaben zu Einsatzstoffen, beispielsweise Emulgatoren, Treibmittel und Härter, und weiteren Verfahrensdetails der Melaminharzschaum-Herstellung enthalten beispielsweise die bereits erwähnten Schriften WO 01/94436, EP-A 17 671, 17 672 und 37 470.

Zur Herstellung der erfindungsgemäßen Schaumstoff-Verbundelemente werden bevorzugt solche Melaminharzschaumstoffe verwendet, deren Rohdichte (nach EN ISO 845) 3 bis 50, insbesondere 7 bis 15 kg/m³ beträgt. Geeignete Melaminharzschaumstoffe sind im Handel erhältlich, beispielsweise als Basotect® von BASF.

Polyurethan-Schaumstoffe sind Polyisocyanat-Polyadditionsprodukte. Unter Polyurethanen sollen hier auch andere Polyisocyanat-Polyadditionsprodukte, insbesondere Polyisocyanurate oder Polyharnstoffe, verstanden werden. Für die erfindungsgemäßen Verbundelemente sind weiche, halbharte oder harte sowie thermoplastische oder vernetzte Polyurethan-Typen geeignet.

Die Herstellung der Polyurethane ist vielfältig beschrieben und erfolgt üblicherweise durch Umsetzung von Isocyanaten a) mit gegenüber Isocyanaten reaktiven Verbindungen b) bei allgemein bekannten Bedingungen. Bevorzugt wird die Umsetzung in Gegenwart von Katalysatoren c) und/oder Hilfsstoffen d) durchgeführt. Wenn es sich um geschäumte Polyisocyanat-Polyadditionsprodukte handelt, so werden diese in Gegenwart von üblichen Treibmitteln e) hergestellt.

Als Isocyanate a) kommen die an sich bekannten aromatischen, arylaliphatischen, aliphatischen und/oder cycloaliphatischen organischen Isocyanate, bevorzugt Diisocyanate in Frage. Als gegenüber Isocyanaten reaktive Verbindungen b) können beispielsweise allgemein bekannte Verbindungen mit einem Molekulargewicht von 60 bis 10000 und einer Funktionalität gegenüber Isocyanaten von 1 bis 8, bevorzugt 2 bis 6 eingesetzt werden (im Falle von thermoplastischen Polyurethanen TPU Funktionalität ca. 2), beispielsweise Polyole mit einem Molekulargewicht von 500 bis 10000, z.B. Polyetherpolyole, Polyesterpolyole, Polyetherpolyesterpolyole, und/oder Diole, Triole und/oder Polyole mit Molekulargewichten kleiner 500.

Als Katalysatoren c) zur Herstellung der Produkte können gegebenenfalls allgemein bekannte Verbindungen eingesetzt werden, welche die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen b), verwendet wird, beispielsweise tertiäre Amine und/oder Metallsalze, beispielsweise anorganische und/oder organische Verbindungen des Eisens, Bleis, Zinks, und/oder Zinns in üblichen Oxidationsstufen des Metalls.

Als Hilfsstoffe d) können gegebenenfalls die im übernächsten Absatz genannten Additive verwendet werden.

Einzelheiten zu Polyurethanen, Polyisocyanuraten und Polyharnstoffen findet der Fachmann im Kunststoff-Handbuch, 3. Auflage, Band 7 "Polyurethane", Hanser Verlag, München 1993.

Polyimide sind Polymere, deren Wiederholungseinheiten durch lineare oder cyclische Imidgruppen verbunden sind. Sie werden beispielsweise durch Polykondensation aliphatischer oder aromatischer Diamine mit aromatischen Tetracarbonsäuredianhydriden (z.B. aus 4,4'-Oxydianilin und Pyromellithsäuredianhydrid) über Polyamidcarbonsäuren als Zwischenstufen hergestellt. Dabei entstehen die Imidgruppen während der Polymersynthese. Die Kondensationsreaktion verläuft allerdings nicht ausschließlich intramolekular unter Cyclisierung, sondern auch intermolekular. Wegen der daraus resultierenden Vernetzung, die eine spätere formgebende Verarbeitung erschwert, wird die Formgebung (hier: das Verschäumen) bevorzugt gleichzeitig mit der RingschlußReaktion ausgeführt. Das bei der Cyclisierung abgespaltene Wasser kann einen störenden Kettenabbau auslösen, weshalb die Polyamidcarbonsäure-Schäume vor der abschließenden Imidisierung meist mit wasserbindenden Akzeptoren getränkt werden. Vernetzung und Hydrolyse lassen sich ebenso durch Ersatz der Diamine durch z.B. Diisocyanate vermeiden.

Die beiden zur in-situ-Imid-Bildung erforderlichen Funktionalitäten können auch in einem einzigen Monomermolekül vereinigt sein, sodass außer AA-BB-Polyimiden auch AB-Polyimide erhältlich sind, die nicht vernetzt sind. Eine Vernetzung während der Polyimidsynthese lässt sich auch durch Monomeren vermeiden, die bereits Imidgruppen bereits vorgeformt enthalten. Solche Monomere sind z.B. Bismaleinimide, die aus Maleinsäureanhydrid und Diaminen erhalten werden, und die anschließend durch Polyaddition mit z.B. Diaminen, Aldoximen, Disulfiden zu Polyimiden umgesetzt werden.

Polyimide im Sinne der Erfindung sind auch solche auch Polymere, die neben Imidgruppen auch Amidgruppen (Polyamidimide), Estergruppen (Polyesterimide) oder Ethergruppen (Polyetherimide) enthalten.

Das Verschäumen zum Polyimid-Schaum erfolgt mittels üblicher Treibmittel in an sich bekannter Weise. Weitere Einzelheiten zu Polyimiden sind beispielsweise dem elektronischen Lexikon Römpp Online, Version 2.8, Thieme-Verlag Stuttgart, 2006, Stichwort "Polyimide" zu entnehmen.

Für manche Zwecke kann es günstig sein, dem Melaminharz-, Polyurethan- oder Polyimid-Schaumstoff bis zu 20 Gew.-%, vorzugsweise bis zu 10 Gew.-%, bezogen auf das ungeschäumte Polymer, Additive (Zusatzstoffe) zuzusetzen. Solche Additive sind z.B. Farbstoffe, Pigmente, Flammschutzmittel, Antioxidantien, UV- oder Wärmestabilisatoren, Hydrolyseschutzmittel, oberflächenaktive Substanzen, fungistatisch und bakteriostatisch wirkende Substanzen, Mittel zur Herabsetzung der Brandgastoxizität oder zur Förderung der Verkohlung. Außerdem kann man Hydrophobierungs- oder Oleophobierungsmittel mitverwenden, siehe weiter unten. Derartige Additive sind dem Fachmann bekannt und handelsüblich.

Das erfindungsgemäße Schaumstoff-Verbundelement ist mehrschichtig und weist mindestens drei Schichten auf. Alle Schichten bestehen aus einem offenzelligen Schaumstoff. Bevorzugt bestehen alle Schichten entweder aus dem beschriebenen Melaminharz-Schaumstoff oder aus dem beschriebenen Polyurethan-Schaumstoff oder aus dem beschriebenen Polyimid-Schaumstoff. Dabei können die verschiedenen Schichten einen identischen Schaumstoff enthalten, oder unterschiedliche Schaumstoffe, die zwar alle Melaminharz- oder Polyurethan-Schaumstoffe oder Polyimid-Schaumstoffe sind, sich jedoch in ihrer Zusammensetzung (u.a. Monomere und Monomerverhältnisse, Additive, etc.), ihrer Struktur (z.B. Zellgröße, Steglängen, Anteil geschlossener Zellen) und/oder ihren Eigenschaften (beispielsweise Dichte, Gasdurchlässigkeit, Härte, Elastizität, Stauch- und Rückstellverhalten, Wärmeisolation, Schallabsorption, etc.) unterscheiden. Bevorzugt weisen alle Schichten einen identischen Schaumstoff auf.

Jedoch sind auch Verbundelemente möglich, die zwei oder mehr Schäume ausgewählt aus Melaminharz, Polyurethan und Polyimid aufweisen.

Die Anzahl der Schichten (nachfolgend auch als n bezeichnet) beträgt bevorzugt 3 bis 10, besonders bevorzugt 3 bis 6, insbesondere 3 bis 5 und ganz besonders bevorzugt 3 oder 5. Die mindestens drei Schichten sind aneinander angeordnet, beispielsweise liegen sie aufeinander. Das Verbundelement weist demnach zwei äußerste Schichten - bei flächiger Ausgestaltung des Elementes also eine Oberseite und eine Unterseite - und (n-2) innere Schichten auf.

Erfindungsgemäß weist mindestens eine der inneren Schichten Aussparungen (Hohlräume) auf, und die beiden äußersten Schichten weisen keine Aussparungen auf.

Daraus ergibt sich als eine bevorzugte Ausführungsform ein Verbundelement, dadurch gekennzeichnet, dass es drei Schichten A, B und C aufweist, wobei die innere Schicht B Aussparungen aufweist und die äußeren Schichten A und C keine Aussparungen aufweisen.

In einer anderen Ausführungsform weist das Verbundelement vier Schichten A, B, C und D auf, wobei mindestens eine der inneren Schichten B und C Aussparungen aufweist und die anderen Schichten (zumindest die äußeren Schichten A und D) keine Aussparungen aufweisen. Bevorzugt weist nur eine der Schichten B und C Aussparungen auf, und die andere nicht.

In einer anderen Ausführungsform weist das Verbundelement fünf Schichten A, B, C, D und E auf, wobei mindestens eine der inneren Schichten B, C und D Aussparungen aufweist und die anderen Schichten (zumindest die äußeren Schichten A und E) keine Aussparungen aufweisen. Bevorzugt weisen zwei der drei Schichten B, C und D Aussparungen auf, und die andere dieser drei Schichten nicht.

Besonders bevorzugt ist ein Verbundelement, dadurch gekennzeichnet, dass es fünf Schichten A, B, C, D und E aufweist, wobei mindestens eine der inneren Schichten B und D Aussparungen aufweist, und die anderen Schichten keine Aussparungen aufweisen. Besonders bevorzugt weisen beide inneren Schichten B und D Aussparungen auf, und die anderen Schichten weisen keine Aussparungen auf, sodass sich eine Schichtfolge ohne-mit-ohne-mit-ohne Aussparungen ergibt.

Sofern im Verbundelement zwei oder mehr Schichten Aussparungen aufweisen, kann zwischen diesen Aussparungs-Schichten eine oder mehrere Schichten ohne Aussparungen angeordnet sein - dies ist bevorzugt - oder nicht. Im letzen Fall, also bei zwei oder mehr direkt aneinanderliegenden Aussparungs-Schichten überschneiden sich die Aussparungen der einzelnen Schichten bevorzugt nicht oder nur in untergeordnetem Ausmaß.

Gemäß Merkmal i) beträgt in der Aussparungen aufweisenden inneren Schicht das Volumen der Aussparungen 20 bis 70 Vol.-%, bevorzugt 25 bis 60 und besonders bevorzugt 27 bis 55 Vol.-%. Der an 100 Vol.-% fehlende Anteil der Schicht besteht dementsprechend aus Schaumstoff.

Sofern das Verbundelement zwei oder mehr Schichten mit Aussparungen aufweist, erfüllt jede dieser Aussparungs-Schichten das Merkmal i). Dabei kann der Anteil der Aussparungen in den verschiedenen Aussparungs-Schichten innerhalb der genannten Vol.-%-Bereiche gleich oder verschieden sein.

Die Gesamtdicke d des Verbundelements ist die Dicke über alle Schaumstoffschichten und beträgt üblicherweise 1 mm bis 100 cm, bevorzugt 2 mm bis 50 cm und insbesondere 5 mm bis 20 cm.

Gemäß Merkmal ii) beträgt die Dicke der Aussparungen aufweisenden Schicht 20 bis 80 %, bevorzugt 30 bis 75 und besonders bevorzugt 35 bis 70 % der Gesamtdicke d des Verbundelements. Wenn das Verbundelement zwei oder mehr Schichten mit Aussparungen aufweist, bezieht sich dieses Merkmal ii) auf alle Aussparungs-Schichten zusammengenommen, d.h. man addiert die Dicken aller Aussparungsschichten unter Erhalt einer Dicke d*, und bildet den Quotienten d*/d, der im %-Bereich des Merkmals ii) liegen muss.

Das Dickenverhältnis der einzelnen Schichten kann in weiten Grenzen variieren und beträgt für das Verhältnis Schicht mit Aussparungen : Schicht ohne Aussparungen üblicherweise 100 : 1 bis 0,1 : 1, bevorzugt 5 : 1 bis 1 : 1 und besonders bevorzugt 2 : 1 bis 1 : 1. Dabei können die mindestens zwei Schichten ohne Aussparungen gleich oder verschieden dick sein. Beispielsweise kann das Dickenverhältnis der beiden äußersten Schichten 5 : 1 bis 1 : 1, bevorzugt 2 : 1 bis 1 : 1 betragen. In einer bevorzugt Ausführungsform sind die Dicken der beiden äußersten Schichten identisch. Ebenfalls bevorzugt sind bei dem erwähnten fünfschichtigen Verbundelement mit der Schichtfolge ohne-mit-ohne-mit-ohne Aussparungen die drei Schichten A, C und E ohne Aussparungen gleich dick.

Ebenso können bei zwei oder mehr Aussparungs-Schichten diese Schichten gleich oder verschieden dick sein. Bei dem erwähnten fünfschichtigen Element mit der Schichtfolge ohne-mit-ohne-mit-ohne Aussparungen sind bevorzugt die beiden Aussparungs-Schichten B und D von identischer Dicke.

Ist eine Aussparungs-Schicht aufgrund der Dicken der einzelnen Schichten oder der Schichtfolge nicht mittig im Verbundelement angeordnet, sondern näher an einer Verbundelementoberfläche angeordnet als an der anderen, so ist bevorzugt die Aussparungs-Schicht den einfallenden Schallwellen abgewandt.

Da der Schaum offenzellig ist, sind die Aussparungen üblicherweise mit der das Verbundelement umgebenden Atmosphäre gefüllt, in der Regel Luft.

Bezüglich der Raumform (Gestalt) der Aussparungen wurde gefunden, dass bestimmte Ausgestaltungen dem Verbundelement besonders gute Eigenschaften, insbesondere eine gute Schallabsorption, verleihen. Die Gestalt der Aussparungen lässt sich zweidimensional beispielsweise durch ihren Querschnitt, d.h. also bei Betrachtung eines Schnittes, der senkrecht zu den Schichten des Verbundelementes verläuft, und ihre Draufsicht, d.h. bei Betrachtung eines Schnittes, der parallel zu den Schichten des Verbundelementes verläuft, beschreiben. Beim Querschnitt wird das Verbundelement von der Seite betrachtet, und bei der Draufsicht wird es von oben bzw. unten betrachtet.

Bevorzugt ist das Verbundelement dadurch gekennzeichnet, dass die Aussparungen im Querschnitt eine rechteckige, quadratische, U-förmige, trapezförmige, dreieckige, kreisförmige oder elliptische Gestalt aufweisen. U-förmige Aussparungen entsprechen einer noppenförmigen Schaumoberfläche.

Bevorzugt ist die Gestalt im Querschnitt rechteckig, quadratisch, U-förmig oder trapezförmig. Besonders bevorzugt sind die Aussparungen im Querschnitt rechteckig oder trapezförmig. Bei der Trapezform kann die längere Seite des Trapez' dem einfallenden Schall zugewandt oder abgewandt sein. Bei einer U-Form kann in ähnlicher Weise die breitere Basis der Aussparung (und nicht die schmalere Spitze) dem einfallenden Schall zugewandt oder abgewandt sein.

Bei einer im Querschnitt rechteckigen oder trapezförmigen Aussparung beträgt das Seitenverhältnis des Rechtecks bzw. Trapez' bevorzugt 4 : 1 bis 0,5 : 1, insbesondere 2 : 1 bis 1 : 1. Beim Trapez ist die mittlere Seitenlänge gemeint. Bevorzugt sind die Aussparungen derart angeordnet, dass bei Betrachtung des Verbundelementquerschnitts die längere Seite des Rechtecks bzw. Trapez' parallel zu den Schichten ist, d.h. bevorzugt sind die Aussparungen "flachliegend" statt "hochkant stehend".

Die Aussparungen können sich über die gesamten Dicke (Höhe) der Aussparungs-Schicht erstrecken - dies ist bevorzugt - oder nur über einen Teil der Dicke.

Ebenso bevorzugt ist das Verbundelement dadurch gekennzeichnet, dass die Aussparungen in der Draufsicht eine kreisförmige, ovale, rechteckige, quadratische oder streifenförmige Gestalt aufweisen. Streifenförmige Gestalt bedeutet, dass die Aussparungen in Längs- oder Querrichtung des Verbundelementes "unendlich" sind, d.h. in dieser Richtung verläuft die Aussparung durch das gesamte Element.

Bevorzugt ist die Gestalt in der Draufsicht kreisförmig, rechteckig, quadratisch oder streifenförmig. Bei einer rechteckigen Aussparung beträgt das Seitenverhältnis des Rechtecks bevorzugt 5 : 1 bis 1 : 1.

Betrachtet man die Aussparung dreidimensional, so sind Aussparungen bevorzugt, die die Gestalt eines Quaders, Würfels, Zylinders, Kegels, Kegelstumpfes, einer Kugel, eines Ellipsoids, Torus (Ring), Tetraeders, Tetraederstumpfes, einer Pyramide, eines Pyramidenstumpfes oder einer Senke (Noppenform des Schaums) haben.

Die Herstellung der erfindungsgemäßen Verbundelemente kann beispielsweise dadurch erfolgen, dass man die einzelnen Schichten getrennt voneinander herstellt und anschließend aneinanderlegt. Insbesondere Schichten aus Melaminharz-Schaum weisen in der Regel an ihren Oberflächen herstellungsbedingt feine Nadeln auf; beim Aufeinanderlegen der Schichten verhaken sich diese Nadeln ineinander ähnlich einem Klettverschluss. Bevorzugt werden insbesondere Schichten aus Melaminharz-Schaum durch ein solches Aufeinanderlegen miteinander verbunden. Falls erforderlich kann man das Ineinanderverhaken der Schichten (und damit die Haftung der Schichten aneinander) durch Andrücken verstärken.

Man kann die Schichten aber auch in anderer Weise miteinader verbinden, beispielsweise durch:
Verkleben: beim Verkleben kann man dazu geeignete Kleber (Haftvermittler) verwenden, beispielsweise Ein- oder Zweikomponentenkleber oder Dispersionskleber. In Betracht kommen u.a. Kleber auf Basis von Polychlorbutadien, Polyacrylaten, Styrol-Acrylat-Copolymeren, Polyurethanen, Epoxiden oder Melamin-Formaldehyd-Kondensationsprodukten. Der Kleber kann durch Sprühen, Streichen, Rollen, Tauchen, Benetzen oder andere dafür geeignete Verfahren auf den Schaum aufgetragen werden.
Verpressen: die Schichten können auch durch Verpressen miteinander verbunden werden. Dazu sind z.B. Etagenpressen oder andere übliche Pressen geeignet, und es wird bei an sich bekannten Pressdrucken, -temperaturen und -dauern verpresst.
Mechanisch: ebenso kann man die Schichten mechanisch miteinander verbinden, beispielsweise durch Vernähen, Versteppen, Tackern (Klammern), Nadeln oder Vernieten. Eine mechanische Verbindung ist auch ohne Fäden, Klammern, Nadeln, Nieten oder andere Hilfsmittel möglich, indem man die Zähelastizität der Schaumstoffe ausnutzt und die Geometrie der Schaumstoffschichten passend ausgestaltet. Beispielsweise können die Schichten bestimmte Elemente, z.B. Hinterschneidungen, Aussparungen, Laschen und/oder Zapfen aufweisen, mit denen man eine Schicht an die andere Schicht klemmt, bzw. die beim Aufeinanderdrücken der Schichten ineinander greifen und die Schichten zusammenhalten.

Das Aufeinanderlegen bzw. die mechanische Verbindung der Schichten haben den Vorteil, dass die Schichten bei einer späteren Wiederverwertung des Verbundelements auf einfache Weise voneinander getrennt werden können. Bevorzugt verbindet man die Schichten durch Aufeinanderlegen oder mechanisch miteinander.

Anstatt die Schichten getrennt voneinander herzustellen und ggf. miteinander zu verbinden wie vorstehend beschrieben, kann man mehrere Schichten simultan durch Coextrusion oder andere geeignete Verfahren herstellen.

Man kann zwei Schichten mit mehreren der genannten Verbindungsmethoden verbinden, und/oder zur Herstellung des Verbundelements verschiedene Verbindungsmethoden anwenden.

Die Aussparungen aufweisende Schicht wird z.B. dadurch erhalten (Verfahren I), dass man zunächst eine normale Schicht ohne Aussparungen herstellt und anschließend die Aussparungen anbringt. Das Anbringen der Aussparungen kann je nach Zusammensetzung, Härte und Elastizität des Schaums und der Gestalt der Aussparung durch Schneiden, Bohren, Stanzen, Beschuss mit Projektilen oder anderen üblichen Methoden erfolgen. Dabei kann das Schneiden bzw. Bohren konventionell mit Messern, Bohrern, Fräsern oder Sägen, aber auch mittels energiereicher Strahlung, beispielsweise Laserlicht (Laserschneiden) erfolgen. Auch ein Schneiden bzw. Bohren mittels Flüssigkeiten (z.B. Wasser) oder Gasen (beispielsweise Luft), die unter hohem Druck aus einer Düse austreten und den Schaum durchtrennen, ist möglich.

Alternativ (Verfahren 11) und beispielsweise dann wenn das Volumen der Aussparungen im oberen Bereich des Merkmals i) liegt, kann man die Aussparungen aufweisende Schicht dadurch erhalten, dass man auf die darunter liegende Schicht (die Aussparungen aufweisen kann oder nicht) Schaumstoffstücke auflegt, und anschließend eine Schicht (die wiederum Aussparungen aufweisen kann oder nicht) darüberlegt. Die Schaumstoffstücke können beispielsweise Streifen, Quader, Würfel, Zylinder oder Ringe sein. Dabei entspricht der Abstand der Schaumstoffstücke voneinander den gewünschten Aussparungen, und die Dicke (Höhe) der Schaumstoffstücke entspricht der Dicke der Aussparungs-Schicht. Die Schaumstoffstücke können falls gewünscht mit der darunterliegenden und/oder darüberliegenden Schicht verbunden werden wie vorstehend beschrieben.

Enthält das Verbundelement zwei oder mehr Aussparungs-Schichten, können diese alle nach demselben Verfahren I oder II hergestellt werden, oder man kann beide Verfahren I und II anwenden.

In einer bevorzugten Ausführungsform ist das Verbundelement dadurch gekennzeichnet, dass mindestens eine äußerste Schicht hydrophobiert oder oleophobiert, oder (dies ist besonders bevorzugt) sowohl hydrophobiert als auch oleophobiert ist. Ganz besonders bevorzugt ist die gesamte Oberfläche des Verbundelements hydrophobiert oder oleophobiert, oder (dies ist wiederum besonders bevorzugt) sowohl hydrophobiert als auch oleophobiert. Hydrophobiert schließt gegen Wasser beständig und wasserdicht, und oleophobiert schließt gegen Öl beständig und öldicht, ein.

Die Hydrophobierung bzw. Oleophobierung kann beispielsweise dadurch erfolgen, dass bereits bei der Herstellung des Schaumstoffs ein Hydrophobierungsmittel bzw. Oleophobierungsmittel mitverwendet wird. Ebenso kann man den fertigen Schaumstoff mit dem Mittel behandeln, indem man z.B. die Schaumoberfläche mit dem Mittel benetzt oder bestreicht, oder den Schaum mit dem Mittel tränkt.

Eine Hydrophobierung bzw. Oleophobierung gelingt auch, indem man eine oder mehrere Oberflächen des Verbundelementes mit einer hydrophoben bzw. oleophoben Schicht kaschiert. Die Kaschierung ist derart zu wählen, dass die Schallabsorption des Verbundelements möglichst wenig beeinträchtigt wird.

Als solche kaschierenden Schichten kommen insbesondere Folien, z.B. Polymerfolien, und außerdem Gewebe oder Vliese aus Textil oder Glasfasern in Betracht. Es können entweder hydrophobe, oder oleophobe, oder - dies ist bevorzugt - hydrophobe und oleophobe Kaschierungen übereinander, angebracht werden. Die Kaschierung wird üblicherweise mit der äußersten Schaumschicht verbunden wie weiter oben bei den Verbindungsmethoden beschrieben, bevorzugt durch Kleben oder Verpressen.

Als Polymerfolien sind Folien aus Polyamid, Polyolefinen, z.B. Polyethylen oder Polypropylen, Polyestern, beispielsweise Polyethylenterephthalat oder Polybutylenterephthalat geeignet. Die Gesamtdicke der Folie beträgt in der Regel 5 bis 100, bevorzugt 5 bis 60 und insbesondere 10 bis 20 µm.

Geeignete Textilfasern für Gewebe oder Vliese sind beispielsweise Cellulose-, Polyester- oder Polyamidfasern.

Als Hydrophobierungsmittel eignen sich z.B. Silikone, Paraffine, Silikon- und Fluortenside. Besonders geeignet sind die Handelsprodukte Dipolit®, eine Fluoralkanemulsion von Fa. Rotta; Sitren®, eine Silikonemulsion von Fa. Degussa; und Persistol®, eine Paraffinemulsion von BASF, und ähnliche Produkte. Geeignete Oleophobierungsmittel sind beispielsweise Fluoralkanemulsionen, z.B. die Handelsprodukte Nuva® von Fa. Clariant, das bereits genannte Dipolit®, und ähnliche Produkte.

Dabei kann man mit den genannten Hydrophobierungsmitteln bzw. Oleophobierungsmitteln entweder unmittelbar den Schaumstoff behandeln, oder die Mittel bei der Herstellung der Kaschierung, also der Folien, Textil- bzw. Glasfaserschichten, mitverwenden bzw. die Mittel auf die Kaschierung aufbringt.

Eine Seite des erfindungsgemäßen Verbundelements, bevorzugt die den einfallenden Schallwellen abgewandte Seite, kann falls gewünscht mit einer stabilisierenden Tragschicht versehen sein. Als Tragschichten eignen sich beispielsweise solche aus Metall, z.B. aus Aluminium oder Stahl, Karton, Gipskarton, Kunststoff und anderen mechanisch stabilen Werkstoffen. Die Tragschicht kann eine geschlossene Platte sein oder Aussparungen aufweisen, beispielsweise als Lochplatte oder Gitter bzw. Netz ausgestaltet sein. Eine Aussparungen aufweisende Tragschicht kann bevorzugt sein, da sie Gewicht einspart und die gewünschte Schallabsorption weniger stark beeinträchtigt.

Die Tragschicht kann auch im Inneren des Verbundelements angeordnet sein, d.h. es befinden sich Schaumstoffschichten beidseitig der Tragschicht. Dies ist insbesondere dann vorteilhaft, wenn der Schall von beiden Seiten auf das Verbundelement trifft.

Das Verbundelement und/oder seine Tragschicht können mit Montagehilfsmitteln bzw. Befestigungsmitteln versehen sein. Diese Mittel erleichtern das Aneinanderfügen mehrerer Verbundelemente zu einer einheitlichen Fläche und die Befestigung der Verbundelemente auf dem Untergrund. Geeignete Mittel sind beispielsweise Klebeflächen, -streifen oder -punkte, Schrauben bzw. Schraublöcher, Nieten, Schnappverbindungen, Klemmen, Einrastverbindungen oder sonstige Mittel. Sie lassen sich z.B. durch Bohrungen, Falze, Stege, Nuten, Ausschnitte oder mittels angeformter Zungen, Zapfen, Laschen o.ä. verwirklichen.

Ebenfalls Erfindungsgegenstand ist die Verwendung der beschriebenen Verbundelemente als schallabsorbierende Elemente, beispielsweise an oder in Gebäuden, Maschinen oder Fahrzeugen.

Die erfindungsgemäßen Verbundelemente sind gegenüber denen des Standes der Technik verbessert. Sie zeichnen sich durch ein geringes Gewicht und zugleich eine gute Schallabsorption aus. Vergleicht man ein erfindungsgemäßes Verbundelement mit einem "massiven" Element ohne Aussparungen, so ist die Verminderung der Schallabsorption unterproportional der Gewichtsreduktion durch das Einbringen der Aussparungen. Reduziert man beispielsweise das Gewicht des Elements durch die Aussparungen um 1/3, so verringert sich die Schallabsorption, verglichen mit dem Element ohne Aussparungen, um weniger als 1/3.

### Beispiele

Aus einem Melaminharzschaumstoff wurden mehrschichtige Verbundelemente (Probekörper) hergestellt. Der Schaumstoff war ein Kondensationsprodukt aus Melamin und Formaldehyd. Die Rohdichte (nach EN ISO 845) dieses Melamin/Formaldehyd-Schaumstoffs betrug 9 kg/m³. Es wurde das Handelsprodukt Basotect® von BASF verwendet. Nachfolgend bedeutet Dicke die Höhe des zylindrischen Probekörpers.

### Probekörper I: zum Vergleich

massiver Zylinder mit 100 mm Durchmesser und 50 mm Dicke d, ohne Aussparungen.

### Probekörper II: dreischichtiges Verbundelement mit einer Aussparungs-Schicht

Zylinder mit 100 mm Durchmesser und 50 mm Gesamtdicke d und folgender Schichtfolge:
- erste Schicht (äußerste Schicht), Dicke 10 mm, ohne Aussparungen
- zweite Schicht (innere Schicht), Dicke 30 mm, mit 19 zylindrischen symmetrisch angeordneten Aussparungen von 15 mm Durchmesser, die Aussparungen wurden durch Bohren erhalten
- dritte Schicht (äußerste Schicht): Dicke 10 mm, ohne Aussparungen
   Die Schichten wurden von Hand aufeinandergelegt und hafteten aneinander.

Die Aussparungen waren im Querschnitt rechteckig und in der Draufsicht kreisförmig. Das Volumen der Aussparungen in der zweiten Schicht betrug 43 Vol.-% dieser Schicht. Die Dicke der zweiten Schicht betrug 60 % der Gesamtdicke d.

### Probekörper III: fünfschichtiges Verbundelement mit zwei Aussparungs-Schichten

Zylinder mit 100 mm Durchmesser und 50 mm Gesamtdicke d und folgender Schichtfolge:
- erste Schicht (äußerste Schicht), Dicke 10 mm, ohne Aussparungen
- zweite Schicht (innere Schicht), Dicke 10 mm, mit 19 zylindrischen symmetrisch angeordneten Aussparungen von 15 mm Durchmesser, die Aussparungen wurden durch Bohren erhalten
- dritte Schicht (innere Schicht), Dicke 10 mm, ohne Aussparungen
- vierte Schicht (innere Schicht), Dicke 10 mm, mit 19 zylindrischen symmetrisch angeordneten Aussparungen von 15 mm Durchmesser, die Aussparungen wurden durch Bohren erhalten
- fünfte Schicht (äußerste Schicht): Dicke 10 mm, ohne Aussparungen Die Schichten wurden von Hand aufeinandergelegt und hafteten aneinander.

Die Aussparungen der zweiten und vierten Schicht waren im Querschnitt rechteckig, in der Draufsicht kreisförmig und lotrecht übereinander angeordnet. Das Volumen der Aussparungen in der zweiten Schicht bzw. in der vierten Schicht betrug jeweils 43 Vol.-% dieser Schicht. Die Dicke der zweiten und vierten Schicht betrug zusammengenommen 40 % der Gesamtdicke d.

### Probekörper IV: dreischichtiges Verbundelement mit trapezförmigen Aussparungen

Zylinder mit 100 mm Durchmesser und 50 mm Gesamtdicke d und folgender Schichtfolge:
- erste Schicht (äußerste Schicht), Dicke 10 mm, ohne Aussparungen
- zweite Schicht (innere Schicht), Dicke 30 mm, mit 19 pyramidenförmigen symmetrisch angeordneten Aussparungen; die Aussparungen wurden durch Fräsen erhalten
- dritte Schicht (äußerste Schicht): Dicke 10 mm, ohne Aussparungen Die Schichten wurden von Hand aufeinandergelegt und hafteten aneinander.

Die Aussparungen waren im Querschnitt trapezförmig und in der Draufsicht quadratisch. Das Volumen der Aussparungen in der zweiten Schicht betrug 30 Vol.-% dieser Schicht. Die Dicke der zweiten Schicht betrug 60 % der Gesamtdicke d.

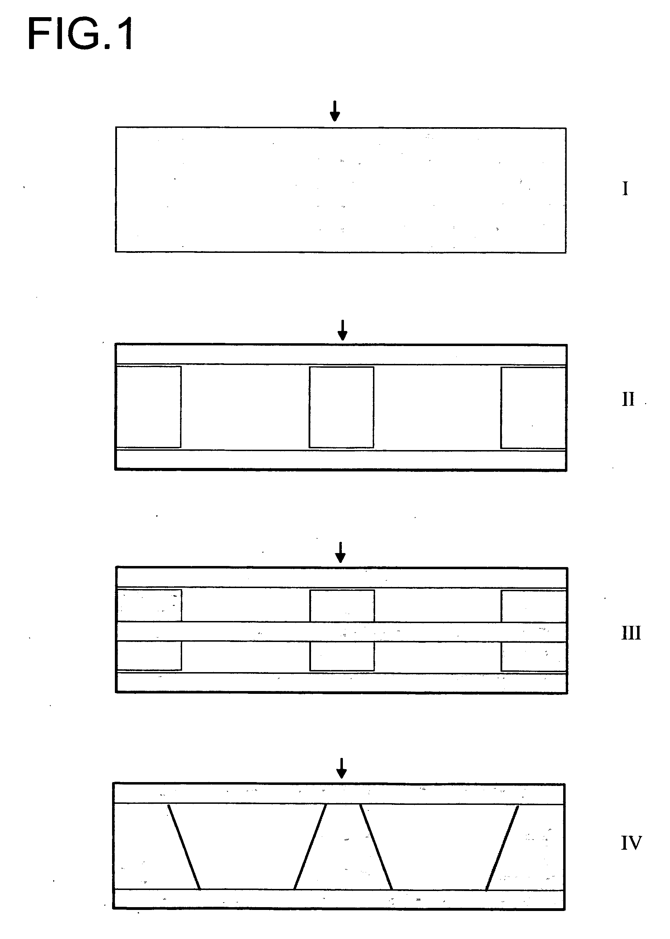

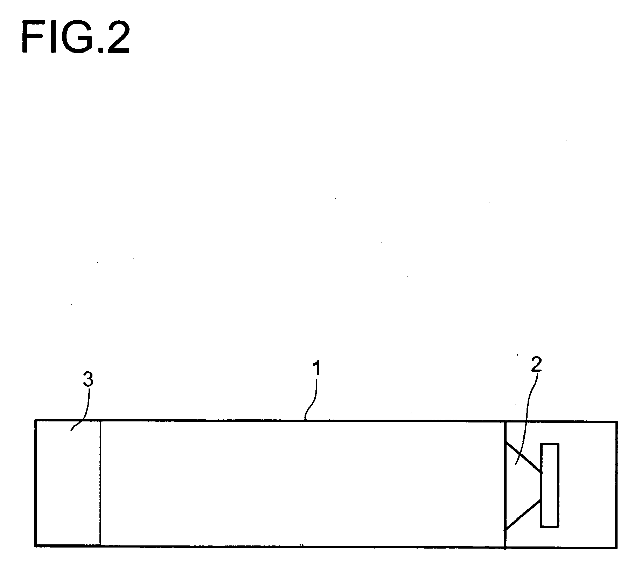

Fig. 1 zeigt schematisch einen Querschnitt der Probekörper I, II, III und IV.Der Pfeil deutet die den Schallwellen (dem Lautsprecher, siehe Fig. 2) zugewandte Seite an.

Es wurde die Schallabsorption der Probekörper als Schallabsorptionsgrad im Impedanzrohr nach DIN EN ISO 10534-1 (Oktober 2001) bestimmt. Die Messfrequenzen waren 800, 1200 und 1600 Hz.

Fig. 2 zeigt schematisch die Messanordnung mit einem Impedanzrohr 1. An einem Ende des Rohres befindet sich ein Lautsprecher 2 und an seinem anderem Ende ein Prüfling 3, also der Probekörper I, II, III oder IV. Der Lautsprecher 2 erzeugt Schallwellen, die auf den Prüfling 3 auftreffen. Nicht dargestellt ist das Mikrophon.

Der Probekörper wurde derart in das Impedanzrohr eingesetzt, dass die Probekörper-Schichten senkrecht zur Achse des Impedanzrohres angeordnet waren. Der Probekörper IV wurde derart eingesetzt, dass die längere Seite der im Querschnitt trapezförmigen Aussparung, also die größere Öffnung der Aussparung, dem Lautsprecher zugewandt war.

Die Tabelle fasst die Ergebnisse zusammen. Bezugspunkt für die Messungen war der massive Probekörper I (zum Vergleich). Die durch die Aussparungen erzielte Gewichtsreduktion der Probekörper II, III und IV in Prozent ist bezogen auf den Probekörper I. Durch die Aussparungen verminderte sich die Schallabsorption, verglichen mit dem massiven Probekörper I. Das Ausmaß dieser Verminderung ist in Prozent angegeben, bezogen auf den Probekörper I.

**Tabelle**

| Beispiel | Probekörper | Gewichtsreduktion, bezogen auf Probekörper I [%] | Verminderung der Schallabsorption, bezogen auf Probekörper I, [%] bei | | |
|---|---|---|---|---|---|
| | | | 800 Hz | 1200 Hz | 1600 Hz |
| 1 Vergl. | I | 0 | 0 | 0 | 0 |
| 2 | II | 33 | 21 | 14 | 6 |
| 3 | III | 22 | 1 | 5 | 4 |
| 4 | IV | 20 | 5 | 2 | 1 |

Bei dem dreischichtigen Probekörper II in Beispiel 2 verminderte eine Gewichtsreduktion von 33 % die Schallabsorption um 6 bis 21 % je nach Schallfrequenz. Die Reduktion der Schallabsorption war demnach unterproportional zur Gewichtsreduktion.

Bei dem fünfschichtigen Probekörper III in Beispiel 3 blieb die Schallabsorption trotz einer Gewichtsreduktion von 22 % nahezu konstant: die Absorption verringerte sich nur um 1 bis 5 %, also stark unterproportional. Bei dem dreischichtigen Probekörper IV mit trapezförmigen Aussparungen (Beispiel 4) blieb die Schallabsorption ebenfalls nahezu unverändert: sie verminderte sich um nur 1 bis 5 % bei einer Gewichtsreduktion von 20%.

Folglich zeichneten sich insbesondere die Verbundelemente III und IV durch eine erhebliche Gewichtseinsparung aus, die nicht auf Kosten der guten Schallabsorption erzielt wurde.

## Patentansprüche

1. Mehrschichtiges Schaumstoff-Verbundelement mit einer Gesamtdicke d, das mindestens drei Schichten aus einem offenzelligen Schaumstoff aufweist, wobei mindestens eine der inneren Schichten Aussparungen aufweist und die beiden äußersten Schichten keine Aussparungen aufweisen, **dadurch gekennzeichnet, dass**
i) in der Aussparungen aufweisenden inneren Schicht das Volumen der Aussparungen 20 bis 70 Vol.-% beträgt, und
ii) die Dicke der Aussparungen aufweisenden Schicht 20 bis 80 % der Gesamtdicke d beträgt .

2. Verbundelement nach Anspruch 1, **dadurch gekennzeichnet, dass** der offenzellige Schaumstoff ausgewählt ist aus einem Melaminharz-Schaumstoff, einem Polyurethan-Schaumstoff und einem Polyimid-Schaumstoff.

3. Verbundelement nach den Ansprüchen 1 bis 2, **dadurch gekennzeichnet, dass** es drei Schichten A, B und C aufweist, wobei die innere Schicht B Aussparungen aufweist und die äußeren Schichten A und C keine Aussparungen aufweisen.

4. Verbundelement nach den Ansprüchen 1 bis 2, **dadurch gekennzeichnet, dass** es fünf Schichten A, B, C, D und E aufweist, wobei mindestens eine der inneren Schichten B und D Aussparungen aufweist, und die anderen Schichten keine Aussparungen aufweisen.

5. Verbundelement nach den Ansprüchen 1 bis 2 und 4, **dadurch gekennzeichnet, dass** beide inneren Schichten B und D Aussparungen aufweisen, und die anderen Schichten keine Aussparungen aufweisen.

6. Verbundelement nach den Ansprüchen 1 bis 5, **dadurch gekennzeichnet, dass** die Aussparungen im Querschnitt eine rechteckige, quadratische, U-förmige, trapezförmige, dreieckige, kreisförmige oder elliptische Gestalt aufweisen.

7. Verbundelement nach den Ansprüchen 1 bis 6, **dadurch gekennzeichnet, dass** die Aussparungen in der Draufsicht eine kreisförmige, ovale, rechteckige, quadratische oder streifenförmige Gestalt aufweisen.

8. Verbundelement nach den Ansprüchen 1 bis 7, **dadurch gekennzeichnet, dass** mindestens eine äußerste Schicht hydrophobiert oder oleophobiert, oder sowohl hydrophobiert als auch oleophobiert ist.

9. Verbundelement nach den Ansprüchen 1 bis 8, **dadurch gekennzeichnet, dass** die gesamte Oberfläche des Verbundelements hydrophobiert oder oleophobiert, oder sowohl hydrophobiert als auch oleophobiert ist.

10. Verwendung der Verbundelemente gemäß den Ansprüchen 1 bis 9 als schallabsorbierende Elemente.

## Claims

1. A multilayer foam composite element whose total thickness d comprises at least three layers composed of an open-cell foam, where at least one of the internal layers has recesses and the two outermost layers have no recesses, wherein
i) the volume of the recesses in the internal layer having recesses is from 20 to 70% by volume, and
ii) the thickness of the layer having recesses is from 20 to 80% of the total thickness d.

2. The composite element according to claim 1, wherein the open-cell foam has been selected from a melamine resin foam, a polyurethane foam, and a polyimide foam.

3. The composite element according to claims 1 to 2, which has three layers A, B and C, where the internal layer B has recesses and the external layers A and C have no recesses.

4. The composite element according to claims 1 to 2, which has five layers, A, B, C, D, and E, where at least one of the internal layers B and D has recesses, and the other layers have no recesses.

5. The composite element according to claims 1 to 2 and 4, wherein the two internal layers B and D have recesses, and the other layers have no recesses.

6. The composite element according to claims 1 to 5, wherein the cross section of the recesses has a rectangular, square, U-shaped, trapezoidal, triangular, circular, or elliptical shape.

7. The composite element according to claims 1 to 6, wherein the recesses in plan view have a circular, oval, rectangular, square, or strip-like shape.

8. The composite element according to claims 1 to 7, wherein at least one outermost layer has been hydrophobicized or oleophobicized, or has been both hydrophobicized and oleophobicized.

9. The composite element according to claims 1 to 8, wherein the entire surface of the composite element has been hydrophobicized or oleophobicized, or has been both hydrophobicized and oleophobicized.

10. The use of the composite elements according to claims 1 to 9 as sound-absorbing elements.

## Revendications

1. Élément composite multicouche à base de mousse, ayant une épaisseur totale d, qui comporte au moins trois couches d'une mousse à cellules ouvertes, au moins l'une des couches internes présentant des évidements et les deux couches externes ne présentant pas d'évidements,
**caractérisé en ce que**
i) dans la couche interne comportant des évidements le volume des évidements est de 20 à 70 % en volume, et
ii) l'épaisseur de la couche comportant des évidements représente de 20 à 80 % de l'épaisseur totale d.

2. Élément composite selon la revendication 1,
**caractérisé en ce que** la mousse à cellules ouvertes est choisie parmi une mousse de résine mélamine, une mousse de polyuréthanne et une mousse de polyimide.

3. Élément composite selon les revendications 1 et 2, **caractérisé en ce qu'**il comporte trois couches A, B et C, la couche interne B présentant des évidements et les couches externes A et C ne présentant pas d'évidements.

4. Élément composite selon les revendications 1 et 2, **caractérisé en ce qu'**elle comporte cinq couches A, B, C, D et E, au moins l'une des couches internes B et D présentant des évidements et les autres couches ne présentant pas d'évidements.

5. Élément composite selon les revendications 1 et 2 et 4, **caractérisé en ce que** les deux couches internes B et D présentent des évidements et les autres couches ne présentent pas d'évidements.

6. Élément composite selon les revendications 1 à 5, **caractérisé en ce que** les évidements ont en section transversale une forme rectangulaire, carrée, en U, trapézoïdale, triangulaire, circulaire ou elliptique.

7. Élément composite selon les revendications 1 à 6, **caractérisé en ce que** les évidements ont, vus d'en haut, une forme circulaire, ovale, rectangulaire, carrée ou en stries.

8. Élément composite selon les revendications 1 à 7, **caractérisé en ce que** ladite au moins une couche externe est rendue hydrophobe ou lipophobe, ou aussi bien hydrophobe que lipophobe.

9. Élément composite selon les revendications 1 à 8, **caractérisé en ce que** toute la surface de l'élément composite est rendue hydrophobe ou lipophobe, ou aussi bien hydrophobe que lipophobe.

10. Utilisation de l'élément composite selon les revendications 1 à 9, en tant qu'élément absorbant le son.
